Europäisches Patentamt

(19) European Patent Office

Office européen des brevets

(11) Numéro de publication : **0 333 534 B1**

(12)

# FASCICULE DE BREVET EUROPEEN

(45) Date de publication du fascicule du brevet :
18.12.91 Bulletin 91/51

(51) Int. Cl.⁵ : **B62K 25/00**

(21) Numéro de dépôt : **89400491.0**

(22) Date de dépôt : **22.02.89**

(54) Dispositif de liaison entre une roue motrice directrice et un organe de commande de direction.

(30) Priorité : **14.03.88 FR 8803281**

(43) Date de publication de la demande :
**20.09.89 Bulletin 89/38**

(45) Mention de la délivrance du brevet :
**18.12.91 Bulletin 91/51**

(84) Etats contractants désignés :
**DE GB IT**

(56) Documents cités :
**EP-A- 0 236 196**
**EP-A- 0 238 768**

(73) Titulaire : **ELF FRANCE, Société Anonyme dite:**
**Tour Elf 2 place de la Coupole La Défense 6**
**F-92400 Courbevoie (FR)**

(72) Inventeur : **Trema, Daniel**
**31 rue du 15 Février**
**F-95870 Bezons (FR)**

(74) Mandataire : **Hirsch, Marc-Roger**
**Cabinet Hirsch 34 rue de Bassano**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention s'applique à un dispositif de liaison selon la première partie de la revendication 1, par exemple un bras unilatéral de suspension avant, de support et de direction d'une roue avant de motocycle reliée au châssis du motocycle par un ressort de suspension interposé directement entre ce bras et ce châssis, ledit bras étant susceptible de tourner autour d'un axe de direction sensiblement orthogonal à celui de ladite roue et situé sensiblement dans le plan longitudinal médian du motocycle. L'invention peut en outre être appliquée, avec l'adjonction de moyens correspondants, à d'autres cas, tels que par exemple celui de véhicules spéciaux à roues directrices multiples dans lesquels la manoeuvre de direction des roues peut s'effectuer roue par roue et où les moyens moteur et de transmission du mouvement de direction à la roue, se situent avantageusement le plus haut possible ; comme c'est le cas notamment de certains véhicules tout terrain, et des aéronefs.

La suspension d'une caisse ou d'un châssis de véhicule doit, pour conserver une tenue de route correcte à ce véhicule, s'effectuer de façon indépendante pour chaque roue, mais cette exigence a pour conséquence que les liaisons entre la roue et les moyens de suspension et de direction sont complexes. Une simplification importante a été apportée aux suspensions de véhicules automobiles à quatre roues, par le type de suspension dénommée depuis "suspension Mac Pherson" et décrite par exemple dans le brevet français 1156145. Dans le cas où ce type de suspension est appliqué à une roue directrice, la fusée de roue est portée de façon rotative par un tube d'amortisseur relié par une biellette articulée à la partie centrale du châssis et la caisse du véhicule repose, dans une position d'appui relativement haute, directement sur un ressort hélicoïdal qui se trouve ainsi appuyé par son extrémité supérieure contre une plaque d'appui solidaire de la caisse et par son extrémité inférieure contre un épaulement d'appui solidaire du tube d'amortisseur ou faisant partie de ce dernier.

Cette solution de suspension compacte et économique s'est répandue rapidement pour la fabrication des automobiles mais elle n'a pas jusqu'ici été employée pour les véhicules à une seule roue directrice avant comme les motocycles car ces derniers exigent un appui de roues avant bien centré dans le plan de symétrie de la roue.

La technique antérieure a apporté certaines solutions à ce problème en proposant pour la roue avant du motocycle une suspension de type Mac Pherson où la roue unique est portée par un bras unique formant jambe de force et relié à un bras de suspension par une articulation à rotule centrée sur l'axe de rotation de direction de la roue avant.

Pour réaliser la liaison entre le guidon de direction et la roue avant, on a proposé d'utiliser des biellettes haute et basse, articulées entre elles en ciseaux par la partie basse de l'une et la partie haute de l'autre, et montées à rotation respectivement, la biellette haute sur une pièce de direction entraînée par le guidon et la biellette basse sur le bras unilatéral parallèlement à la fusée de la roue et selon un axe sensiblement perpendiculaire à l'axe de direction. Ce type de liaison à biellettes articulées entre le guidon de direction et le bras unilatéral de roue fonctionne correctement et permet de disposer d'une direction précise mais se révèle trop encombrant compte tenu du débattement en ciseaux des biellettes qui exigent, en position fermée du ciseau, un espace important vers l'avant.

La présente invention a pour objet d'apporter une solution nouvelle particulièrement avantageuse du point de vue de l'encombrement (donc susceptible d'être capotée de façon très aérodynamique), et du point de vue de la fiabilité dans toutes les situations de débattement du bloc télescopique, au problème consistant à orienter un bras unilatéral portant une fusée de roue et une roue directrice avant de motocycle, ledit bras unilatéral étant relié directement au châssis par l'intermédiaire d'un ressort de suspension et par un (ou plusieurs) bras de suspension.

Un autre objet de l'invention est d'appliquer le moyen d'orientation de l'objet principal à d'autres véhicules qu'un motocycle à roue avant directrice, dans lesquels l'entraînement de direction n'est pas réalisé au moyen d'un guidon mais par exemple grâce à un moyen de commande adéquat, ce moyen étant mécanique, hydraulique, électrique, pneumatique ou autre, permettant ainsi de commander l'orientation d'un bras unilatéral portant une fusée ou un axe de roue directrice, sans avoir besoin de prévoir une timonerie encombrante autour de la partie médiane et si possible aussi de la partie haute dudit bloc de suspension-direction. Une telle solution peut s'appliquer par exemple entre autres à des véhicules spéciaux dans lesquels on ne recherche pas obligatoirement une orientation identique à tout moment de deux roues d'une paire de roues droite et gauche, comme c'est le cas jusqu'à présent dans les véhicules automobiles conventionnels.

Selon l'invention, le dispositif de liaison entre une roue directrice de véhicule et un organe de commande de direction, la roue directrice étant portée par un bras unilatéral relié à un bras de suspension monté, à l'une de ses extrémités, à rotation sur un axe transversal du châssis du véhicule et, à son autre extrémité, monté de façon articulée sur le bras unilatéral par une articulation à rotule dont le centre de pivotement se situe dans l'alignement de l'axe de rotation du bras de direction et un bloc de suspension et/ou d'amortissement, par exem-

EP 0 333 534 B1

ple à cylindre télescopique et à tige mobile, étant interposé entre une extrémité supérieure d'appui du bras unilatéral et une pièce d'appui montée de façon fixe sur le châssis du véhicule ou en faisant partie, est caractérisé en ce que le bras unilatéral comporte une tige de transmission et de guidage dirigée vers le haut de façon excentrée et fixée rigidement sur lui et en ce que cette tige coopère avec un coulisseau, sur lequel est articulée à une extrémité au moins une biellette dont l'autre extrémité est articulée à un anneau de direction relié à l'organe de commande de direction.

La tige de transmission et de guidage peut être disposée sur toute sa longueur à une distance sensiblement constante de l'axe de rotation de direction du bras unilatéral, c'est-à-dire est sensiblement parallèle à cet axe, ou bien elle peut être inclinée par rapport à l'axe de rotation du bras unilatéral pour épouser sensiblement la surface d'un cône au cours de la rotation du bras unilatéral autour de son axe.

Selon un autre mode de réalisation de l'invention, la tige de transmission et de guidage est creuse et présente une surface extérieure durcie par tout moyen adéquat et des moyens de coulissement à roulement, par exemple à billes, à rouleaux, à aiguilles, sont interposés entre le coulisseau et la tige de transmission et de guidage.

Le coulisseau et/ou au moins la surface extérieure de la tige de transmission et de guidage sont, de préférence, réalisés en un matériau présentant de bonnes qualités frottantes, et la tige de transmission et de guidage présente une surface extérieure cylindrique.

Selon un mode de réalisation améliorant le guidage du coulisseau sur la tige, au moins deux couronnes parallèles d'organes de roulement, par exemple des billes, des galets, des aiguilles, sont interposées entre le coulisseau et la tige de transmission et de guidage.

Selon un autre mode de réalisation encore, la biellette est constituée de deux biellettes distinctes reliées entre elles par une partie en C pour former une pièce monobloc, ces deux biellettes distinctes étant articulées par leur extrémité basse sur le coulisseau qui entoure au moins un organe de roulement interposé entre la tige de transmission et la bague du coulisseau.

Afin d'éviter la dégradation de la tige de transmission et de guidage par les projections au cours du roulage du motocycle, elle est entourée par une enveloppe de protection et de guidage solidaire du support de liaison portant ladite tige de transmission et solidaire du bras unilatéral.

D'autres buts, avantages et caractéristiques apparaîtront à la lecture de la description d'un mode de réalisation de l'invention, faite à titre non limitatif et en regard du dessin annexé dans lequel :

— la figure 1     est une vue schématique partielle en élévation latérale de l'avant d'un motocycle comportant un ensemble d'amortissement et/ou de suspension de roue directrice avant selon l'invention, représenté dans la partie haute en demi-coupe selon le plan longitudinal médian du véhicule;

— la figure 2     est une vue fragmentaire à plus grande échelle en coupe transversale selon un plan perpendiculaire à l'axe de la roue (ou à la fusée de la roue), de l'articulation entre l'extrémité basse d'une biellette de direction et d'un coulisseau.

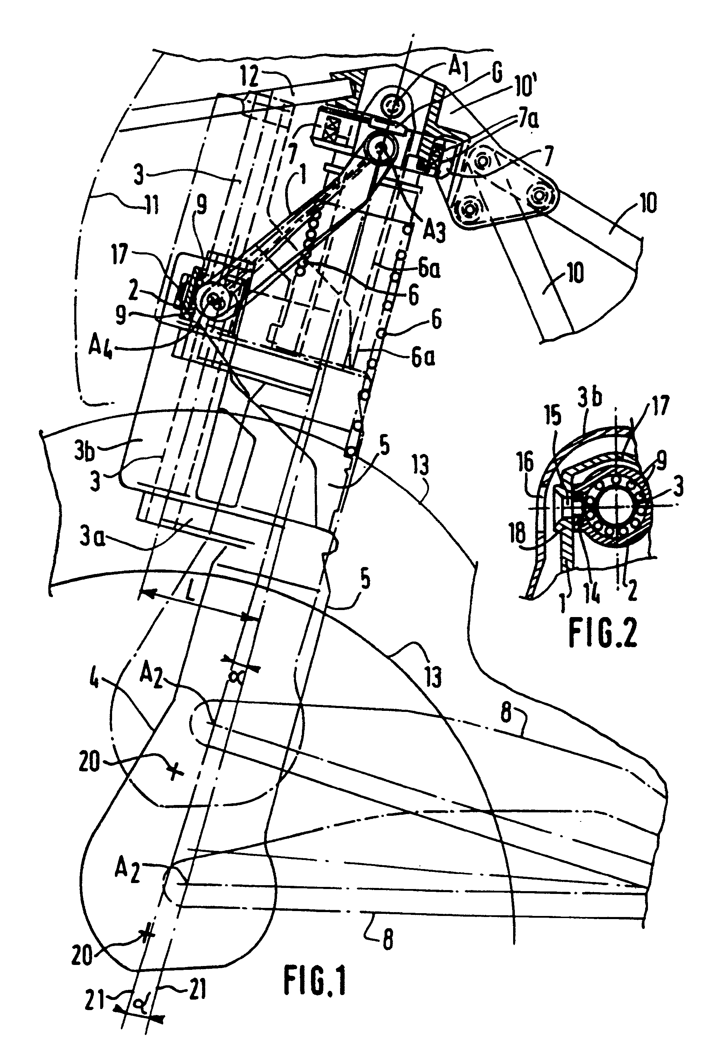

Sur l'ensemble représenté à la figure 1, on identifie une partie du châssis 10 relié à un raccord 10' placé au-dessus d'une bague de direction 7 solidaire d'un guidon de direction G. La bague de direction 7 montée à rotation autour du raccord 10' par des roulements à bille 7a, est reliée par deux biellettes parallèles 1 (dont une seule est représentée) à un bras unilatéral 4 de support d'une roue avant 13. Les biellettes 1 sont articulées en $A_3$ sur la bague de direction et en $A_4$ sur un coulisseau 2 guidé de façon coulissante sur une tige rigide 3 portée par un support 3a solidaire du bras unilatéral orientable en rotation selon un axe de direction 21 et que porte l'axe de roue 20. Le support 3a est représenté en position basse en traits pleins et en position haute en traits mixtes avec le bras unilatéral 4, qui est relié par une articulation $A_2$ à un bras de liaison rotatif articulé sur le châssis du motocycle. Un bloc télescopique d'amortissement et/ou de suspension constitué ici d'un amortisseur 5 et d'un ressort hélicoïdal 6 entourant l'amortisseur, est solidaire par sa partie de corps d'amortisseur de la partie supérieure du bras unilatéral 4. La tige de piston 6a de l'amortisseur 5 est articulée en $A_1$ au raccord 10' qui porte par ailleurs un bras support 12 d'un carénage 11.

L'ensemble ressort-amortisseur 5, 6 est ainsi articulé par l'articulation $A_1$ avec le raccord 10' solidaire par une triangulation de barres du châssis du motocycle. L'articulation $A_1$ permet à l'ensemble d'amortissement et/ou de suspension 5, 6, 6a de pivoter d'un faible angle alpha par rapport au châssis 10 du fait du léger déplacement vers l'avant ou vers l'arrière de l'articulation $A_2$ avec le bras de suspension 8 lors des débattements du bloc télescopique, provoquant une rotation du bras de suspension 8.

Ce débattement d'un angle alpha entraîne également un déplacement correspondant vers le haut de la tige 3 portée avec son enveloppe 3b par le support 3a. La tige 3 se déplace alors à l'intérieur du coulisseau 2 en forme de bague avec un minimum de frottements du fait que des séries de couronnes de billes 9 sont interposées entre la bague de coulisseau 2 sur laquelle sont articulées les biellettes 1 et la surface extérieure de

3

EP 0 333 534 B1

la tige creuse 3.

Le coulisseau 2 est constitué et monté de façon appropriée pour coulisser aisément sur la surface cylindrique extérieure de la tige 3, ici au moyen de billes, d'aiguilles ou de rouleaux, d'autres moyens pouvant être également employés dans ce but selon les techniques connues, par exemple à l'aide d'un simple palier lisse, le coulisseau 2 et la tige 3 présentant de bonnes qualités frottantes obtenues par exemple par recouvrement d'une couche de matière plastique.

La biellette représentée plus en détail à la figure 2 comporte deux branches en tôle formant cependant un monobloc mais pourrait également ne comporter qu'une seule branche ou encore pourrait être remplacé par deux biellettes séparées à gauche et à droite. La solution représentée et préférée d'une biellette monobloc à deux branches reliées entre elles par une partie en C 17 et dont les parties inférieures renflées 18 adjacentes à la partie en C 17 sont montées à gauche et à droite du coulisseau, de manière à offrir une bonne rigidité.

La figure 2 montre également plus en détail l'articulation $A_4$ entre les biellettes 1 et le coulisseau 2. L'extrémité de la biellette 1 porte, montée sur une série de couronnes de billes 9, la bague de coulisseau 2 qui porte elle-même en des positions diamétralement opposées des roulements à billes 14, dont l'axe est perpendiculaire à celui de la tige rigide tubulaire 3. Chacun de ces roulements à billes 14 coopère avec un axe 15 poussé sur les biellettes 1 après avoir été introduit à travers une ouverture 16 ménagée à travers l'enveloppe 3b de la tige 3. L'articulation $A_4$ peut ainsi supporter des décalages par rapport aux axes des pièces articulées, ces décalages pouvant être provoqués par la géométrie du système mais également par des distorsions dues à la flexibilité faible mais réelle des pièces antagonistes.

Dans le cas où la tige de guidage 3 du coulisseau n'est pas parallèle à l'axe de rotation du bras unilatéral, cette articulation $A_4$ et l'articulation $A_2$ permettent aux biellettes, d'effectuer des pivotements de faible amplitude dus aux écarts du coulisseau 2 par rapport à l'axe de rotation du bras unilatéral imposés par la forme du chemin de déplacement et de guidage.

Lorsque la couronne de direction 7, entraînée par le guidon G ou un autre moyen, tourne autour de l'axe de direction 21, les biellettes 1 sont entraînées en rotation et tournent également par leur extrémité basse située à distance de l'axe de direction 21. L'action des biellettes 1 sur le bras de levier L du support 3a exerce sur le bras unilatéral 4 un couple qui l'entraîne en rotation sensiblement du même angle que le guidon G et qui entraîne donc la roue 13 portée par la fusée selon l'axe 20, perpendiculaire à l'axe de rotation du bras de suspension 8. Ce couple s'exerce quelle que soit la position du coulisseau 2 par rapport à la tige 3 qui suit le débattement du bras unilatéral 4 par rapport au raccord 10' du châssis. Lors de ces débattements du bras 4 par rapport au raccord 10', l'axe de rotation 21 du bras unilatéral 4 se déplace d'un angle alpha entre la position basse de la roue 13 et sa position haute par rapport au châssis du motocycle.

Dans le cas du mode de réalisation représenté sur le dessin, le bras de levier L d'application de la force de rotation sur le bras unilatéral 4 est quasi-constant du fait que la tige 3 est sensiblement parallèle à l'axe de rotation 21 du bras unilatéral. En inclinant ou cambrant la tige 3 et en prévoyant pour le coulisseau 2 des moyens de glissement et/ou de roulement adaptés à cette inclinaison ou à ce cambrage, on peut faire varier la longueur L du bras de levier en fonction de la position de débattement de la suspension, en vue par exemple de prévoir pour un même effort au guidon G, d'exercer un couple de direction plus important lorsque la suspension avant est comprimée et que la charge sur la roue avant est maximale.

On comprendra aisément qu'un dispositif de liaison de direction selon l'invention peut être commandé par d'autres moyens moteurs qu'un guidon ou un volant de motocycle, pour être utilisé notamment dans des véhicules à plusieurs roues directrices, dans lesquels il est souhaitable d'avoir une jambe de force de suspension-direction qui puisse être actionnée par un dispositif présentant un faible encombrement et, par ailleurs, disposé le plus haut possible, de façon à pouvoir être implanté dans un volume réduit. Ces moyens moteurs peuvent être commandés eux-mêmes par des signaux émis par un dispositif logique alimenté lui-même en amont par des données représentatives du déplacement du véhicule et des ordres donnés par le du conducteur, et qui sont analysées et transformées de façon connue par ledit dispositif logique.

Bien entendu, la présente invention n'est pas limitée aux modes de réalisation décrits et représentés et elle est susceptible de nombreuses variantes accessibles à l'homme de l'art sans que l'on ne s'écarte du cadre de l'invention précisé dans les revendications, notamment lorsque le bras unilatéral 4 et une partie des pièces qui lui sont fixées sont réalisés par soudure totale ou partielle ou bien par enroulement ou entrecroisement de fibres.

## Revendications

1. Dispositif de liaison entre une roue directrice de véhicule et un organe de commande de direction, la roue directrice étant portée par un bras unilatéral relié à un bras de suspension monté, à l'une de ses extrémités,

4

à rotation sur un axe transversal du châssis du véhicule et, à son autre extrémité, monté de façon articulée sur le bras unilatéral par une articulation à rotule dont le centre de pivotement se situe dans l'alignement de l'axe de rotation du bras de direction et un bloc de suspension et/ou d'amortissement, par exemple à cylindre télescopique et à tige mobile, étant interposé entre une extrémité supérieure d'appui du bras unilatéral et une pièce d'appui montée de façon fixe sur le châssis du véhicule ou en faisant partie, caractérisé en ce que le bras unilatéral (4) comporte une tige de transmission et de guidage (3) dirigée vers le haut de façon excentrée et fixée rigidement sur lui et en ce que cette tige coopère avec un coulisseau (2), sur lequel est articulée à une extrémité (en $A_4$) au moins une biellette (1) dont l'autre extrémité est articulée (en $A_3$) à un anneau de direction (7) reliée à l'organe de commande de direction (G).

2. Dispositif de liaison selon la revendication 1, caractérisé en ce que la tige de transmission et de guidage (3) est disposée sur toute sa longueur à une distance sensiblement constante de l'axe de rotation de direction (21) du bras unilatéral (4), c'est-à-dire est sensiblement parallèle à cet axe (21).

3. Dispositif de liaison selon la revendication 1, caractérisé en ce que la tige de transmission et de guidage (3) est inclinée par rapport à l'axe de rotation (21) du bras unilatéral (4) pour épouser sensiblement la surface d'un cône au cours de la rotation du bras unilatéral autour de son axe (21).

4. Dispositif de liaison selon l'une des revendications 1 à 3, caractérisé en ce que la tige (3) de transmission et de guidage est creuse et présente une surface extérieure durcie par tout moyen adéquat.

5. Dispositif selon l'une des revendications 1 à 4, caractérisé en ce que des moyens de coulissement à roulement, par exemple à billes, à rouleaux, à aiguilles, sont interposés entre le coulisseau (2) et la tige de transmission et de guidage (3).

6. Dispositif de liaison selon l'une des revendications 1 à 5, caractérisé en ce que le coulisseau et/ou au moins la surface extérieure de la tige de transmission et de guidage (3) sont réalisés en un matériau présentant de bonnes qualités frottantes.

7. Dispositif de liaison selon l'une des revendications 1 à 6, caractérisé en ce que la tige (3) de transmission et de guidage présente une surface extérieure cylindrique.

8. Dispositif de liaison selon la revendication 7, caractérisé en ce qu'au moins deux couronnes parallèles d'organes de roulement, par exemples des billes (9), des galets, des aiguilles, sont interposées entre le coulisseau (2) et la tige (3) de transmission et de guidage.

9. Dispositif de liaison selon l'une des revendications 1 à 8, caractérisé en ce que la biellette (1) est constituée de deux biellettes distinctes reliées entre elles par une partie en C (17) pour former une pièce monobloc, ces deux biellettes distinctes étant articulées par leur extrémité basse sur le coulisseau (2) qui entoure au moins un organe de roulement interposé entre la tige de transmission (3) et la bague du coulisseau (2).

10. Dispositif de liaison selon l'une des revendications 1 à 9, caractérisé en ce que la tige de transmission et de guidage (3) est entourée par une enveloppe de protection et de guidage (3b) solidaire du support de liaison (3a) portant ladite tige de transmission et solidaire du bras unilatéral (4).

## Patentansprüche

1. Einrichtung zur Verbindung eines Fahrzeuglenkrads mit einem Lenkorgan, bei der das Lenkrad von einem einseitig angeordneten Arm oder Seitenarm gehalten wird, der mit einem Aufhängungsarm verbunden ist, dessen eines Ende schwenkbar an einer Fahrzeugquerachse angelenkt, während sein anderes Ende an den Seitenarm angelenkt ist vermittels eines Kugelgelenks, dessen Drehmittelpunkt auf der Drehachse des Lenkarms liegt, wobei ein Aufhängungs- bzw. Dämpfungsblock, der beispielsweise einen teleskopischen Zylinder und eine bewegliche Stange umfasst, zwischen einem oberen Stützende des Seitenarms und einem mit dem Fahrzeugrahmen einstückigen oder fest verbundenen Stützteil angeordnet ist, dadurch gekennzeichnet, dass der Seitenarm (4) eine sich exzentrisch nach oben erstreckende, mit ihm fest verbundene Übertragungs- und Führungsstange (3) aufweist, und dass die letztere mit einem Gleitstück (2) zusammenwirkt, an das mit einem Ende (bei $A_4$) wenigstens eine Schubstange (1) angelenkt ist, deren anderes Ende (bei $A_3$) an einen mit dem Lenkorgan (G) verbundenen Lenkring (7) angelenkt ist.

2. Verbindungseinrichtung nach Anspruch 1, dadurch gekennzeichnet, dass die Übertragungs- und Führungsstange (3) über ihre gesamte Länge in wesentlich konstantem Abstand von der Lenk- und Schwenkachse (21) des Seitenarms (4), d.h. wesentlich parallel zu derselben angeordnet ist.

3. Verbindungseinrichtung nach Anspruch 1, dadurch gekennzeichnet, dass die Übertragungs- und Führungsstange (3) in bezug auf die Schwenkachse (21) des Seitenarms (4) geneigt ist, um während der Schwenkbewegung des Seitenarms um dessen Achse (21) wesentlich eine Kegelfläche zu beschreiben.

4. Verbindungseinrichtung nach einem der Ansprüche 1 bis 3, dadurch gekennzeichnet, dass die Übertragungs- und Führungsstange (3) hohl ist und eine auf geeignete Weise gehärtete Aussenfläche besitzt.

5. Einrichtung nach einem der Ansprüche 1 bis 4, dadurch gekennzeichnet, dass beispielsweise Kugeln, Rollen oder Nadeln aufweisende Rollgleitmittel zwischen dem Gleitstück (2) und der Übertragungs- und Führungsstange (3) angeordnet sind.

6. Verbindungseinrichtung nach einem der Ansprüche 1 bis 5, dadurch gekennzeichnet, dass das Gleitstück bzw. wenigstens die Aussenfläche der Übertragungs- und Führungsstange (3) aus einem Material mit günstigen Reibungseigenschaften gefertigt ist.

7. Verbindungseinrichtung nach einem der Ansprüche 1 bis 6, dadurch gekennzeichnet, dass die Übertragungs- und Führungsstange (3) eine zylindrische Aussenfläche aufweist.

8. Verbindungseinrichtung nach Anspruch 7, dadurch gekennzeichnet, dass zwischen dem Gleitstück (2) und der Übertragungs- und Führungsstange (3) wenigstens zwei parallele Rollenkörperkränze (9), wie Kugel- Rollen- oder Nadellagerkränze angeordnet sind.

9. Verbindungseinrichtung nach einem der Ansprüche 1 bis 8, dadurch gekennzeichnet, dass die Schubstange (1) aus zwei gesonderten, dank ihrer Verbindung vermittels eines C-förmigen Teils eine einstückige Baueinheit bildende Schubstangen besteht, wobei diese beiden gesonderten Schubstangen mit ihrem unteren Ende am wenigstens ein zwischen der Übertragungsstange (3) und dem Ringgleitstück (2) angeordnetes Wälz- oder Rollorgan umgreifenden Gleitstück (2) angelenkt sind.

10. Verbindungseinrichtung nach einem der Ansprüche 1 bis 9, dadurch gekennzeichnet, dass die Übertragungs- und Führungsstange (3) von einer Schutz- und Führungshülle (3b) umgeben wird, die mit dem die Übertragungsstange tragenden Verbindungsträger (3a) und dem Seitenarm (4) fest verbunden ist.

## Claims

1. A coupling device between a steerable wheel of a vehicle and a steering control member of said vehicle, the steerable wheel being carried by a single arm connected to a suspension arm rotatively mounted, at one of its ends, on a transversal axis of the chassis of the vehicle, and at its other end pivotally mounted on the single arm by means of a ball joint the center of pivoting of which is aligned with the axis of rotation of the steering arm, and a suspension and/or shock absorbing unit, for example employing a telescopic cylinder and movable rod, being interposed between an upper supporting end of the single arm and a support part integrally mounted on the chassis of the vehicle or constituting a part thereof characterized in that the single arm (4) carries a transmission and guiding rod (3) directed excentrically upwards and rigidly fixed thereupon and in that this rod cooperates with a slide bar (2) on which (at A₄) the first end of at least one link is pivotally connected the other end of said link being pivotally connected (at A₃) to a steering ring (7) connected to the steering control member (G).

2. A coupling device according to claim 1, characterized in that the transmission and guiding rod (3) is disposed over its entire length at a substantially constant distance from the steering axis of rotation (21) of the single arm (4), or otherwise stated is substantially parallel to this axis (21).

3. A coupling device according to claim 1, characterized in that the transmission and guiding rod (3) is inclined with respect to the axis of rotation (21) of the single arm (4) in order to substantially follow the surface of a cone during the rotation of the single arm about its axis (21).

4. A coupling device according to one of claims 1 to 3, characterized in that the transmission and guiding rod (3) is hollow and provided with an outer surface that is hardened by any appropriate means.

5. A device according to one of claims 1 to 4, characterized in that rolling sliding means, employing for example ball bearings, rollers, needles, are interposed between the slide bar (2) and the transmission and guiding rod (3).

6. A coupling device according to one of claims 1 to 5, characterized in that the slide bar and/or at least the outer surface of the transmission and guiding rod (3) are made of a material having low friction properties.

7. A coupling device according to one of claims 1 to 6, characterized in that the transmission and guiding rod (3) is provided with a cylindrical outer surface.

8. A coupling device according to claim 7, characterized in that at least two parallel crowns of rolling members, for example ball bearings (9), rollers, needles, are interposed between the slide bar (2) and the transmission and guiding rod (3).

9. A coupling device according to one of claims 1 to 8, characterized in that the link (1) is constituted of two separate links connected to each other by a C-shaped part (17) to form an integral piece, these two distinct links being pivotally connected by their lower end on the slide bar (2) that surrounds at least one bearing member interposed between the transmission and guiding rod (3) and the ring of the slide bar (2).

10. A coupling device according to one of claims 1 to 9, characterized in that the transmission and guiding rod (3) is surrounded by a protection and guiding shell (3b) integral with a coupling support (3a) carrying the said transmission and guiding rod and integral with the single arm (4).

**FIG.2**

**FIG.1**